# EUROPÄISCHE PATENTSCHRIFT

(11) **EP 4 154 982 B1**
(45) Veröffentlichungstag und Bekanntmachung des Hinweises auf die Patenterteilung: **20.11.2024**
(21) Anmeldenummer: 21199036.1
(22) Anmeldetag: 27.09.2021
(51) Int. Cl.: B02C 18/14

(54) **WELLENKUPPLUNG UND ZERKLEINERUNGSVORRICHTUNG MIT EINER SOLCHEN WELLENKUPPLUNG**
SHAFT COUPLING AND A DISINTEGRATION DEVICE WITH SUCH A SHAFT COUPLING
ACCOUPLEMENT D'ARBRE ET DISPOSITIF DE DÉSAGRÉGATION AVEC UN TEL ACCOUPLEMENT D'ARBRE

(43) Veröffentlichungstag der Anmeldung: 29.03.2023
(73) Patentinhaber: Lindner, Manuel, 9800 Spittal/Drau (AT)
(72) Erfinder: LINDNER, Manuel, 9800 Spittal/Drau (AT); WEINGARTNER, Peter, 9991 Dölsach (AT)
(74) Vertreter: Grünecker Patent- und Rechtsanwälte PartG mbB

(56) Entgegenhaltungen:
- EP-A1- 0 583 505
- WO-A1-2006/123441
- BE-A- 548 802
- CN-Y- 2 637 812
- DE-C1- 3 335 719
- JP-U- S5 911 921
- KR-A- 20010 068 135
- KR-B1- 100 414 566
- NL-B1- 1 042 736
- US-A- 1 965 145
- US-A- 764 103

## Beschreibung

### Gebiet der Erfindung

Die vorliegende Erfindung betrifft eine Wellenkupplungsvorrichtung und insbesondere eine Wellenkupplungsvorrichtung zum Verbinden einer Antriebswelle einer Zerkleinerungsvorrichtung zur Zerkleinerung von Material, insbesondere in Form von Abfallprodukten, mit einer Rotorwelle der Zerkleinerungsvorrichtung. Die vorliegende Erfindung betrifft weiterhin eine Zerkleinerungsvorrichtung mit einer solchen Wellenkupplungsvorrichtung.

### Stand der Technik

In vielfältigen technischen Bereichen werden Wellen, beispielsweise Antriebswellen und angetriebene Wellen, über Kupplungen, etwa Gleichlaufgelenke, miteinander verbunden. Die Antriebswelle wird durch einen Motor in Drehung versetzt und diese Drehung wird durch die Kupplung auf die angetriebene Welle übertragen. Die Kupplungen sind im Allgemeinen so ausgebildet und mit den Wellen verbunden, dass sie lösbar sind. Beispielsweise kann eine Wartung oder ein erforderlicher Austausch der angetriebenen Welle eine solche Lösung der Kupplung erfordern. Das Lösen der Kupplung stellt im Allgemeinen einen relativ zeitaufwändigen und mühsamen mechanischen Vorgang dar. So ist es herkömmlicher Weise erforderlich, die Antriebswelle oder die angetriebene Welle (typischer Weise letztere) axial zur Lösung der Kupplung zu verschieben. Dieses kann insbesondere bei schweren Maschinen, wie Zerkleinerern zur Zerkleinerung industrieller Abfälle, relativ zeitaufwändigen und mühsam sein.

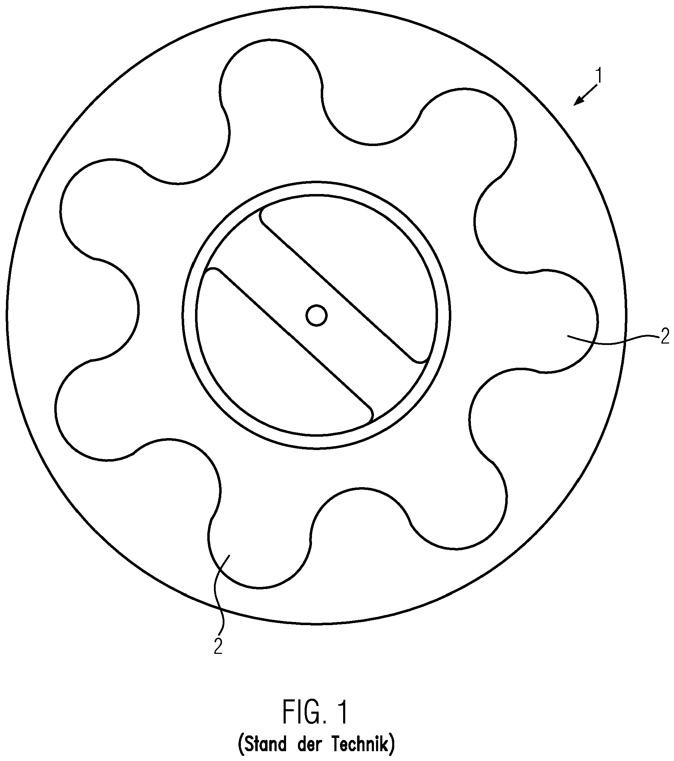

Gewerbeabfall, Industrieabfall, Hausabfall etc., z.B. (Hart-)Kunststoff, Textilien, Verbundstoffe, Gummi oder Althölzer (wie Paletten und Spanplatten), bedürfen vor ihrer endgültigen Entsorgung oder insbesondere vor der Rückführung in den Wertstoffkreislauf der Zerkleinerung. Zur Zerkleinerung finden typischerweise Ein- oder Mehrwellen - Zerkleinerer Verwendung, welche beispielsweise durch Radlader, Gabelstapler oder Förderbänder über einen Trichter zur Materialaufgabe beschickt werden. Die Zerkleinerung des aufgegebenen Materials erfolgt zwischen mit einer Rotorwelle (Zerkleinerungswelle) rotierenden Messern und stationären, d.h. nicht rotierenden, Gegenmessern (Statormessern, Abstreifkämmen). Die Rotorwelle wird durch eine Antriebswelle angetrieben, die über eine Kupplung mit jener verbunden ist. Beispielhaft ist in Figur 1 eine Kleeblattkupplung 1 des Stands der Technik im Querschnitt gezeigt. In die kleeblattförmigen Aussparungen 2 werden entsprechend geometrisch passende Endbereiche einer Rotorwelle eingepasst, sodass die Kupplung die Rotorwelle mit einer gegenüberliegenden Antriebswelle verbindet. Eine Rotorwelle eines Zerkleinerers kann beispielsweise ein Gewicht im Bereich von etwa einer bis etwa vier Tonnen aufweisen. Eine axiale Verschiebung der Rotorwelle zur Lösung der Kupplung, die die Rotorwelle mit der Antriebswelle verbindet, stellt also einen aufwändigen Vorgang dar.

In der KR 2001 0068 135 wird eine Kupplung mit locking yaws, locking connections, Schrauben und einem buffer member mit buffer wings beschrieben. In der WO 2006 123 441 A1 wird eine Kettenkupplung beschrieben. In der US 764 103 wird eine Flanschkupplung mit Bohrungen und Bolzen beschrieben. Siehe auch BE548802 als Stand der Technik.

Es ist angesichts der oben genannten Probleme eine der vorliegenden Erfindung zugrundeliegende Aufgabe, eine verbesserte Kupplungsvorrichtung, insbesondere für eine Zerkleinerungsvorrichtung, bereitzustellen, deren Lösung dahingehend erleichtert werden kann, dass es für diese Lösung nicht der axialen Verschiebung der durch die Kupplungsvorrichtung miteinander gekuppelten Wellen bedarf.

### Beschreibung

Die obige Aufgabe wird durch eine Wellenkupplungsvorrichtung (ein Wellenkupplungssystem) gemäß Anspruch 1 gelöst, die (das) umfasst:
eine erste Wellennabe einer ersten Welle, wobei die erste Wellennabe mehrere erste Aufnahmeeinheiten umfasst;
eine zweite Wellennabe einer zweiten Welle, wobei die zweite Wellennabe mehrere zweite Aufnahmeeinheiten umfasst; und
mehrere Verbindungselemente zum (direkten) Verbinden der ersten und zweiten Wellennabe miteinander; und wobei
die mehreren ersten Aufnahmeeinheiten, insbesondere ausschließlich, entlang des Umfangs der ersten Wellennabe voneinander beabstandet ausgebildet sind, und die mehreren zweiten Aufnahmeeinheiten, insbesondere ausschließlich, entlang des Umfangs der zweiten Wellennabe voneinander beabstandet ausgebildet sind.

Weiterhin sind die mehreren ersten Aufnahmeeinheiten als erste Aussparungen entlang des Umfangs der ersten Wellennabe ausgebildet und die mehreren zweiten Aufnahmeeinheiten als zweite Aussparungen entlang des Umfangs der zweiten Wellennabe ausgebildet, und jedes der mehreren Verbindungselemente ist in sowohl eine der mehreren ersten Aufnahmeeinheiten als auch eine der mehreren zweiten Aufnahmeeinheiten einpassbar. Zudem sind die mehreren ersten und zweiten Aufnahmeeinheiten so ausgebildet, dass die mehreren Verbindungselemente in ausschließlich radialer Bewegungsrichtung lösbar einpassbar sind und ausschließlich in radialer Bewegungsrichtung von der ersten und der zweiten Wellennabe lösbar sind
Die Abstände der ersten Aufnahmeeinheiten entlang des Umfangs der ersten Wellennabe voneinander und der zweiten Aufnahmeeinheiten entlang des Umfangs der zweiten Wellennabe voneinander können hierbei prinzipiell regelmäßig oder unregelmäßig sein, wobei die Abstände in der ersten Wellennabe denen in der zweiten Wellennabe entsprechen.

Eine Lösung der erfindungsgemäßen Wellenkupplungsvorrichtung und somit der gekuppelten Wellen voneinander kann ohne jegliche axiale Verschiebung von den durch die Wellenkupplungsvorrichtung miteinander verbundenen Wellen erfolgen. Gerade bei relativ schweren Wellen (beispielsweise mit Gewichten im Bereich einer oder mehrerer Tonnen) und engen Bauräumen erlaubt die erfindungsgemäße Wellenkupplungsvorrichtung daher im Vergleich zum Stand der Technik eine leichtere und schnellere Lösung der Kupplungsverbindung zweier Wellen (beispielsweise einer Antriebswelle und einer antreibbaren/angetriebenen Welle).

Die Positionen der Aussparungen in der ersten Wellennabe entsprechen denen der Aussparungen in der zweiten Wellennabe. Die Aussparungen erstrecken sich hierbei nicht durch den gesamten Durchmesser der Wellennaben. Die ersten Aussparungen können beispielsweise ein Tiefe von 1/4 bis 2/3 des Radius der ersten Wellennabe aufweisen, und die zweiten Aussparungen können beispielsweise ein Tiefe von 1/4 bis 2/3 des Radius der zweiten Wellennabe aufweisen. Die ersten Aussparungen können eine Tiefe aufweisen, die von derjenigen der zweiten Aussparungen verschieden ist oder auch nicht. Auch müssen nicht sämtliche erste Aussparungen dieselbe Tiefe aufweisen, und es müssen nicht sämtliche zweite Aussparungen dieselbe Tiefe aufweisen.

Die mehreren ersten oder zweiten Aufnahmeeinheiten können derart ausgebildet sein, dass die mehreren Verbindungselemente in die mehreren ersten und/oder zweiten Aufnahmeeinheiten mit Spiel lösbar einpassbar sind, etwa um Achsenfehler beziehungsweise Winkelfehler zwischen den Achsen der zu kuppelnden Wellen auszugleichen. Insbesondere kann in den genannten ersten und/oder zweiten Aussparungen ein elastisches Material (beispielsweise ein Silikonmaterial) vorgesehen sein, etwa um Schwingungen zu dämpfen.

Die oben genannte radiale Bewegungsrichtung ist eine Richtung einer Bewegung der Verbindungselemente senkrecht zu einer Längsachse, die durch die erste beziehungsweise zweite Wellennabe (und somit durch die erste beziehungsweise zweite Welle) verläuft. Mit dem Begriff "ausschließlich in radialer Richtung" soll umfasst sein, dass fertigungs-/anordnungsbedingt prinzipiell ein kleiner endlicher Winkel zwischen der durch die erste Wellennabe und erste Welle verlaufenden Längsachse und der durch die zweite Wellennabe und zweite Welle verlaufenden Längsachse vorliegen kann. Im eingesetzten/eingepassten Zustand können die Verbindungselemente parallel zur Längsachse orientiert sein.

Die Verbindungselemente werden gemäß dieser Weiterbildung also senkrecht zu der Längsachse zum Verbinden der Wellen(naben) miteinander und zum Lösen der Wellen(naben) voneinander bewegt, ohne dass eine der Wellen(naben) axial verschoben wird. Nach Lösung der Verbindungselemente kann eine der Wellen senkrecht zur Längsachse zur Wartung oder zum Austausch bewegt werden.

Jedes der mehreren Verbindungselemente kann in sowohl eine der mehreren ersten Aufnahmeeinheiten als auch eine der mehreren zweiten Aufnahmeeinheiten einpassbar sein.

Die erste Wellennabe und die zweite Wellennabe können, entsprechend der geometrischen Form typischer Wellen, rotationssymmetrisch, insbesondere kreisförmig, ausgebildet sein.

Die mehren Verbindungselemente können quaderförmig ausgebildet sein, wobei Ecken und/oder Kanten und/oder Flächen der Quader abgerundet sein können. Solche Verbindungselemente können kostengünstig und verlässlich, beispielsweise aus einem Stahlmaterial, hergestellt werden. Andere geometrischen Formen, beispielsweise runde Formen, der Verbindungselemente können alternativ gewählt werden. Der Einfluss der genauen geometrischen Form auf die Funktionalität der Verbindungselemente ist jedoch relativ gering.

Die Wellenkupplungsvorrichtung kann ein Befestigungsmittel umfassen, das dazu ausgebildet ist, die mehreren Verbindungselemente in den mehreren ersten Aufnahmeeinheiten und/oder den mehreren zweiten Aufnahmeeinheiten zu sichern.

Das Befestigungsmittel zum Sichern der Verbindungselemente in den Aufnahmeeinheiten kann beispielsweise nur an einer der beiden Wellennaben angebracht sein. Das Befestigungsmittel kann Schrauben und/oder einen Ringflansch umfassen. Mithilfe von Schrauben beziehungsweise einem Ringflansch kann eine schnelle und verlässliche Sicherung der Verbindungselemente in den Aufnahmeeinheiten und somit des gekuppelten Zustands erreicht werden. Das Befestigungsmittel muss lösbar sein, um eine Lösung der Wellenkupplungsvorrichtung zu erlauben. Wenn das Befestigungsmittel Schrauben umfasst, können zumindest einige der Verbindungselemente Gewinde oder gewindefreie Durchgänge umfassen, die zur Aufnahme der Schrauben ausgebildet sind, und es kann die erste Wellennabe und/oder die zweite Wellennabe Gewinde umfassen, die ebenfalls zur Aufnahme der Schrauben ausgebildet sind.

Achsenfehler beziehungsweise Winkelfehler zwischen den Achsen der zu kuppelnden Wellen können ausgeglichen werden, wenn die mehreren ersten oder zweiten Aufnahmeeinheiten derart ausgebildet sind, dass die mehreren Verbindungselemente in die mehreren ersten oder zweiten Aufnahmeeinheiten mit Spiel lösbar einpassbar sind. Sobald ein Drehmoment auf eine der Wellen übertragen wird, erfolgt trotz eines vorgesehenen Spiels eine feste Kupplungsverbindung der Wellen miteinander.

Es wird weiterhin eine Zerkleinerungsvorrichtung bereitgestellt, die einen Materialaufnahmeraum, eine erste Welle und eine zweite Welle sowie eine Wellenkupplungsvorrichtung gemäß einem der oben beschriebenen Beispiele zum Verbinden der Antriebswelle mit der Rotorwelle umfasst. Die erste Welle kann eine Antriebswelle und die zweite Welle kann eine in dem Materialaufnahmeraum angeordnete Rotorwelle sein. Andere Wellen der Zerkleinerungsvorrichtung können alternativ oder zusätzlich über eine erfindungsgemäße Wellenkupplungsvorrichtung miteinander verbunden sein. Die oben beschriebenen Beispiele der erfindungsgemäßen Wellenkupplungsvorrichtung können vorteilhafter Weise für relativ große und schwere Zerkleinerungsvorrichtungen zum Zerkleinern von beispielsweise Holz-, Kunststoff- oder Textilabfallprodukte oder andere Industrie-, Agrar- und Hausabfälle mit Gewichten im Tonnenbereich Verwendung finden. Es versteht sich, dass die erfindungsgemäße Zerkleinerungsvorrichtung sowohl Einwellen- als auch Mehrwellenzerkleinerer und insbesondere Vertikalzerkleinerer umfasst. Die Rotorwelle solcher Zerkleinerungsvorrichtungen muss nach einer bestimmten Betriebsdauer gewechselt werden und der hierfür notwendige Entkupplungsvorgang von der Antriebswelle ist herkömmlich mühsam und zeitaufwändig. Die Verwendung der erfindungsgemäßen Wellenkupplungsvorrichtung erleichtert den Entkupplungsvorgang, da die auszutauschende Rotorwelle nicht axial bewegt werden muss.

Bei einem Zweiwellen-Zerkleinerer, in dem zwei autarke Wellen arbeiten, kann die erfindungsgemäßen Wellenkupplungsvorrichtung beispielsweise nur für eine der beiden Wellen eingesetzt werden.

Weiterhin wird ein Verfahren zum Kuppeln einer ersten Welle mit einer zweiten Welle mit den folgenden in der genannten Reihenfolge aufeinander folgenden Schritten bereitgestellt:
Bereitstellen der ersten Welle mit einer ersten Wellennabe mit mehreren ersten Aufnahmeeinheiten, die, insbesondere ausschließlich, entlang des Umfangs der ersten Wellennabe voneinander beabstandet ausgebildet sind;
Bereitstellen der zweiten Welle mit einer zweiten Wellennabe mit mehreren zweiten Aufnahmeeinheiten, die, insbesondere ausschließlich, entlang des Umfangs der zweiten Wellennabe voneinander beabstandet ausgebildet sind; und
Einpassen mehrerer Verbindungselemente in die mehreren ersten Aufnahmeeinheiten der ersten Wellennabe und die mehreren zweiten Aufnahmeeinheiten der zweiten Wellennabe, insbesondere ausschließlich in radialer Bewegungsrichtung.

Die mehreren Verbindungselemente können anschließend in den mehreren ersten Aufnahmeeinheiten und/oder den mehreren zweiten Aufnahmeeinheiten mithilfe eines Befestigungsmittels gesichert werden.

In dem gekuppelten Zustand, also nach dem Einpassen der Verbindungselemente und Sichern derselben mithilfe des Befestigungsmittels können die erste und zweite Wellennabe einander kontaktieren (auf Stoß miteinander sein), oder es kann ein Zwischenraum zwischen der ersten und zweiten Wellennabe verbleiben.

Entsprechend wird ein Verfahren zum Entkuppeln einer ersten Welle von einer zweiten Welle, die über eine Wellenkupplungsvorrichtung gemäß einem der oben beschriebenen Beispiele miteinander verbunden sind, bereitgestellt, das die folgenden in der genannten Reihenfolge aufeinanderfolgenden Schritten umfasst:
Lösen der mehreren Verbindungselemente der Wellenkupplungsvorrichtung, insbesondere durch ausschließlich radiales Bewegen der mehreren Verbindungselemente von der ersten Wellennabe der ersten Welle und der zweiten Wellennabe der zweiten Welle weg; und
Verschieben der ersten Welle gegenüber der zweiten Welle ausschließlich in einer Richtung senkrecht zu der Längsrichtung der zweiten Welle (der beiden Wellen).

Vor dem Lösen der mehreren Verbindungselemente kann ein Befestigungsmittel der Wellenkupplungsvorrichtung, das zum Sichern der Verbindungselemente vorgesehen sein kann, gelöst werden.

Weitere Merkmale und beispielhafte Ausführungsformen der vorliegenden Erfindung werden nachfolgend anhand der Zeichnung näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 stellt eine Kleeblattkupplung des Stands der Technik dar.
Figur 2 zeigt einen Teil einer Wellenkupplungsvorrichtung gemäß einer Ausführungsform der vorliegenden Erfindung in einem gelösten Zustand.
Figur 3 zeigt eine Wellenkupplungsvorrichtung gemäß einer Ausführungsform der vorliegenden Erfindung in einem gekuppelten Zustand.
Figur 4 zeigt eine Zerkleinerungsvorrichtung, in der die erfindungsgemäße Wellenkupplungsvorrichtung Verwendung finden kann.

Die vorliegende Erfindung stellt eine Wellenkupplungsvorrichtung bereit, die zwei Wellen miteinander zur Übertragung von Drehmomenten kuppelt (verbindet). Die Wellenkupplungsvorrichtung ist so ausgebildet, dass bei einer Entkupplung der Wellen keine der beiden Wellen axial bewegt werden muss, wodurch beispielsweise ein Austausch einer der Wellen vereinfacht wird.

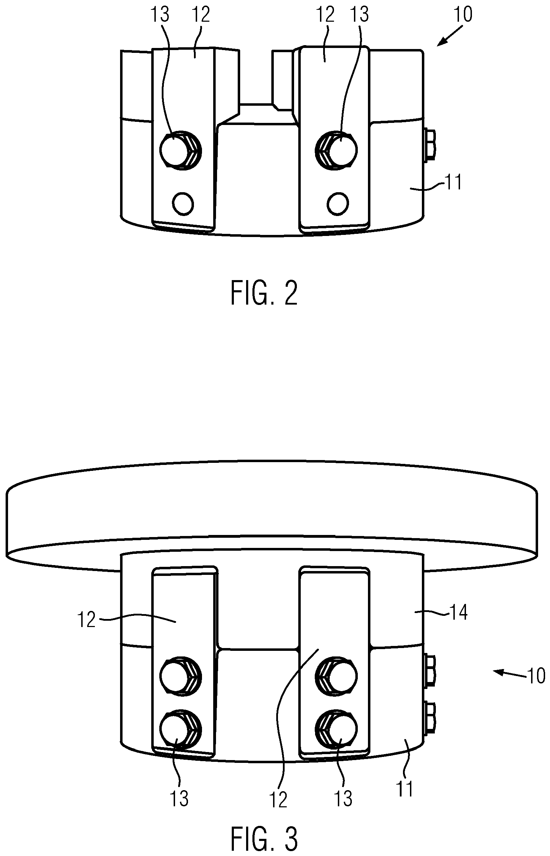

In Figur 2 ist ein Teil einer Wellenkupplungsvorrichtung 10 (eine geöffnete Kupplung) gemäß einer Ausführungsform der vorliegenden Erfindung gezeigt. Die Wellenkupplungsvorrichtung 10 umfasst eine erste Wellennabe 11 einer ersten Welle (beispielsweise einer Antriebswelle oder antreibbaren Welle). Weiterhin umfasst die Wellenkupplungsvorrichtung 10 mehrere quaderförmige Verbindungselemente 12, die in der gezeigten Ausführungsform in Aufnahmeeinheiten in Form von Aussparungen eingepasst sind (die Aufnahmeeinheiten beziehungsweise Aussparungen sind in Figur 2 durch die eingepassten Verbindungselemente 12 verdeckt). Die Aussparungen (und somit die quaderförmigen Verbindungselemente 12) sind voneinander beabstandet entlang des Umfangs der ersten Wellennabe 11 angeordnet.

Die Verbindungselemente 12 sind in den Aussparungen der ersten Wellennabe 11 durch Schrauben 13 gesichert. Andere Befestigungsmittel, wie ein Ringflansch, können alternativ oder zusätzliche Verwendung finden. Jedes der mehreren Verbindungselemente 12 kann durch eine oder mehrere Schrauben in den Aussparungen gesichert werden. Hierzu sind entsprechende Gewinde in den Aussparungen der ersten Wellennabe 11 vorgesehen. Die Schrauben 13 können durch Gewinde oder gewindefreie Durchgänge in den Verbindungselemente 12 geführt werden. Die erste Wellennabe sowie die Verbindungselemente 12 können aus einem Metallmaterial, etwa Stahl, bestehen oder ein solches umfassen, und die Aussparungen können in die erste Wellennabe 11 gefräst sein. Durch die Anordnung und Ausbildung der Aussparungen können die Verbindungselemente 12 ausschließlich in einer radialen Bewegungsrichtung in die Aussparungen der ersten Wellennabe 11 eingepasst oder aus diesen entfernt werden.

Figur 3 zeigt einen gekuppelten Zustand zweier Wellen (Wellenkupplungsvorrichtung 10 geschlossen). Hierbei sind die Verbindungselemente 12 auch in entsprechenden Aussparungen einer zweiten Wellennabe 14 einer zweiten Welle (beispielsweise einer Antriebswelle oder antreibbaren Welle) eingepasst. Jedes der Verbindungselemente 12 ist in einer der Aussparungen der ersten Wellennabe 11 und einer der Aussparungen der zweiten Wellennabe 14 eingepasst. Auch in die Aussparungen der zweiten Wellennabe 14 können die Verbindungselemente 12 ausschließlich in einer radialen Bewegungsrichtung eingepasst werden beziehungsweise sie können ausschließlich in einer radialen Bewegungsrichtung aus den Aussparungen entfernt werden. Die eingepassten Verbindungselemente 12 sind parallel zu einer durch die erste und zweite Wellennabe 11, 14 verlaufenden Längsachse ausgerichtet.

In der in Figur 3 gezeigten Ausführungsform sind die Schrauben 13 nur zu Befestigung der Verbindungselemente 12 an der ersten Wellennabe 11 vorgesehen. So können die Verbindungselemente 12 insbesondere in den Aussparungen der zweiten Wellennabe 14 mit einem gewissen Spiel eingepasst werden, wodurch sich Achsenfehler beziehungsweise Winkelfehler der Achsen der Wellen in ihrer Ausrichtung zueinander ausgleichen lassen. Im Allgemeinen kann ein vorgesehenes Spiel, wenn gewünscht, mit einem elastischen Material, etwa eine Silikonmaterial, ausgefüllt werden.

Die in Figur 3 gezeigte geschlossene Wellenkupplungsvorrichtung 10 kann wie folgt gelöst werden. Zunächst werden die Schrauben 13 gelöst. Dann können die Verbindungselemente 12 der Wellenkupplungsvorrichtung 10 durch ausschließlich radiales Bewegen von der ersten Wellennabe 11 der ersten Welle und der zweiten Wellennabe 14 der zweiten Welle weg gelöst werden. Nach Entfernen der Verbindungselemente 12 kann eine der Wellen gegenüber der anderen Welle ausschließlich in einer Richtung senkrecht zu der Längsrichtung der beiden Wellen verschoben und beispielsweise gewartet oder ausgetauscht werden.

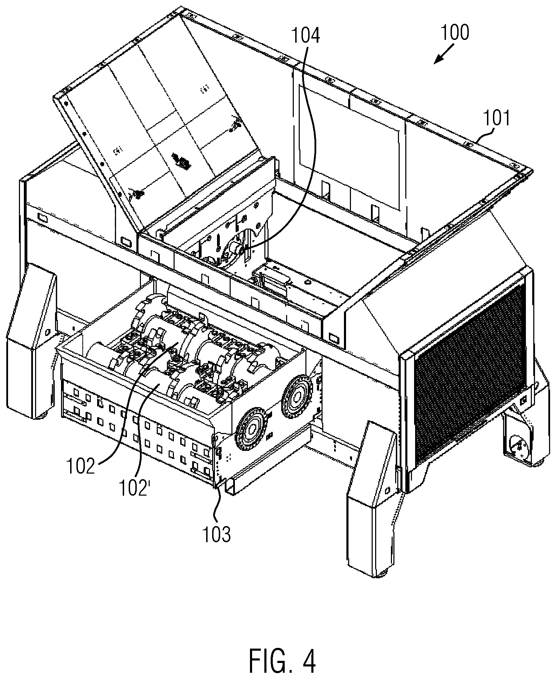

Ein Austausch einer durch die erfindungsgemäße Wellenkupplungsvorrichtung 10 mit einer anderen Welle gekuppelten Welle kann also ohne eine radiale Bewegung einer der Wellen erfolgen. Dieses ist insbesondere beim Austausch schwerer Wellen (beispielsweise mit Gewichten im Tonnenbereich) vorteilhaft, da sich schwere Wellen nur mühsam in Längsrichtung bewegen lassen. Eine geeignete Verwendung findet die erfindungsgemäße Wellenkupplungsvorrichtung 10 für die Kupplung von einer Antriebswelle und einer Rotorwelle von einer Zerkleinerungsvorrichtung zum Zerkleinern von Holz-, Kunststoff- oder Textilabfallprodukten oder anderen Industrie-, Agrar- und Hausabfällen. Eine beispielhafte Zerkleinerungsvorrichtung 100 in Form eines Zweiwellen-Zerkleinerers ist in Figur 4 gezeigt.

Gemäß einer Ausführungsform umfasst die in Figur 4 gezeigte Zerkleinerungsvorrichtung 100 die Wellenkupplungsvorrichtung 10. Die Zerkleinerungsvorrichtung 100 umfasst einen Materialaufnahmeraum 101 in den zu zerkleinerndes Material eingefüllt werden kann. Beispielsweise kann der Materialaufnahmeraum 101 durch Radlader, Gabelstapler oder Förderbänder über einen Trichter mit dem zu zerkleinernden Material beschickt werden.

Das zu zerkleinernde Material wird mithilfe von Rotorwellen 102, 102', die mit Messern ausgestattet sind, zerkleinert. Ein nicht in Figur 4 gezeigter Nachdrücker kann vorgesehen sein, um das zu zerkleinernde Material zu den Rotorwellen 102, 102` zu drücken. In Figur 4 sind diese Rotorwellen 102, 102` in einem Wartungszustand und nicht in dem Betriebszustand gezeigt. In dem Wartungszustand sind sie auf einer Trägerkassette 103 seitlich aus dem Materialaufnahmeraum 101 herausgefahren. Die Zerkleinerungsvorrichtung 100 umfasst für jede der beiden Rotorwellen 102, 102` je eine Antriebswelle, deren Wellennaben 104 innerhalb oder außerhalb des Materialaufnahmeraums 101 positioniert sein können. Die Wellennabe 104 kann die in den Figuren 2 und 3 gezeigte erste Wellennabe 11 oder die in Figur 3 gezeigte zweite Wellennabe 14 oder dieser ähnlich sein kann.

Jede der beiden Rotorwellen 102, 102` weist ebenfalls eine entsprechende Wellennabe auf, die der in den Figuren 2 und 3 gezeigten ersten Wellennabe 11 oder der in Figur 3 gezeigten zweiten Wellennabe 14 oder dieser ähnlich sein kann. Dadurch dass die Zerkleinerungsvorrichtung 100 die erfindungsgemäße Wellenkupplungsvorrichtung, beispielsweise die in den Figuren 2 und 3 veranschaulichte Wellenkupplungsvorrichtung 10, zur Kupplung der Antriebswellen und Rotorwellen 102, 102' aufweist, kann die Wellenkupplungsvorrichtung ohne eine axiale Verschiebung der Rotorwellen 102, 102' gelöst werden. Das Befestigungsmittel und die Verbindungselemente können gelöst und entfernt werden und nachfolgend kann die Kassette 103 mit den darauf gelagerten Rotorwellen 102, 102' senkrecht zu deren Achsen zur Wartung oder zum Austausch einer der Rotorwellen 102, 102' oder beider Rotorwellen 102, 102' ausgeschoben werden.

## Patentansprüche

1. Wellenkupplungsvorrichtung (10), umfassend
eine erste Wellennabe (11) einer ersten Welle, wobei die erste Wellennabe (11) mehrere erste Aufnahmeeinheiten umfasst;
eine zweite Wellennabe (14) einer zweiten Welle, wobei die zweite Wellennabe (14) mehrere zweite Aufnahmeeinheiten umfasst;
mehrere Verbindungselemente (12) zum Verbinden der ersten und zweiten Wellennabe miteinander; und wobei
die mehreren ersten Aufnahmeeinheiten entlang des Umfangs der ersten Wellennabe voneinander beabstandet ausgebildet sind, und die mehreren zweiten Aufnahmeeinheiten entlang des Umfangs der zweiten Wellennabe voneinander beabstandet ausgebildet sind; wobei
die mehreren ersten Aufnahmeeinheiten als erste Aussparungen entlang des Umfangs der ersten Wellennabe (11) ausgebildet sind, und die mehreren zweiten Aufnahmeeinheiten als zweite Aussparungen entlang des Umfangs der zweiten Wellennabe (14) ausgebildet sind und jedes der mehreren Verbindungselemente (12) in sowohl eine der mehreren ersten Aufnahmeeinheiten als auch eine der mehreren zweiten Aufnahmeeinheiten einpassbar ist; und **dadurch gekennzeichnet, dass**
die mehreren ersten und zweiten Aufnahmeeinheiten so ausgebildet sind, dass die mehreren Verbindungselemente (12) in ausschließlich radialer Bewegungsrichtung lösbar einpassbar sind und ausschließlich in radialer Bewegungsrichtung von der ersten und der zweiten Wellennabe lösbar sind.

2. Die Wellenkupplungsvorrichtung (10) gemäß Anspruch 1, wobei in den ersten und/oder zweiten Aussparungen ein elastisches Material vorgesehen ist.

3. Die Wellenkupplungsvorrichtung (10) gemäß einem der vorhergehenden Ansprüche, in der die erste Wellennabe (11) und die zweite Wellennabe (14) rotationssymmetrisch ausgebildet sind.

4. Die Wellenkupplungsvorrichtung (10) gemäß einem der vorhergehenden Ansprüche, in der die mehren Verbindungselemente (12) quaderförmig ausgebildet sind.

5. Die Wellenkupplungsvorrichtung (10) gemäß einem der vorhergehenden Ansprüche, die weiterhin ein Befestigungsmittel (13) umfasst, das dazu ausgebildet ist, die mehreren Verbindungselemente (12) in den mehreren ersten Aufnahmeeinheiten und/oder den mehreren zweiten Aufnahmeeinheiten zu sichern.

6. Die Wellenkupplungsvorrichtung (10) gemäß Anspruch 5, in der das Befestigungsmittel (13) Schrauben und/oder einen Ringflansch umfasst.

7. Die Wellenkupplungsvorrichtung (10) gemäß Anspruch 6, in der
das Befestigungsmittel (13) Schrauben umfasst;
zumindest einige der Verbindungselemente (12) Gewinde oder gewindefreie Durchgänge umfassen, die zur Aufnahme der Schrauben ausgebildet sind, und
die erste Wellennabe (11) und/oder die zweite Wellennabe (14) Gewinde umfassen, die zur Aufnahme der Schrauben ausgebildet sind.

8. Die Wellenkupplungsvorrichtung (10) gemäß einem der vorhergehenden Ansprüche, in der die mehreren ersten oder zweiten Aufnahmeeinheiten derart ausgebildet sind, dass die mehreren Verbindungselemente (12) in die mehreren ersten oder zweiten Aufnahmeeinheiten mit Spiel lösbar einpassbar sind.

9. Zerkleinerungsvorrichtung (100), die umfasst:
einen Materialaufnahmeraum (101);
eine erste Welle, insbesondere eine Antriebswelle;
eine zweite Welle, insbesondere eine in dem Materialaufnahmeraum angeordnete Rotorwelle (102, 102`); und
eine Wellenkupplungsvorrichtung (10) gemäß einem der vorhergehenden Ansprüche zum Verbinden der Antriebswelle mit der Rotorwelle (102, 102').

10. Die Zerkleinerungsvorrichtung (100) gemäß Anspruch 9, wobei die Zerkleinerungsvorrichtung (100) ein Einwellen- oder Mehrwellenzerkleinerer, insbesondere ein Vertikalzerkleinerer ist.

11. Verfahren zum Kuppeln einer ersten Welle mit einer zweiten Welle mit den folgenden in der genannten Reihenfolge aufeinanderfolgenden Schritten:
Bereitstellen der ersten Welle mit einer ersten Wellennabe (11) mit mehreren ersten Aufnahmeeinheiten, die entlang des Umfangs der ersten Wellennabe (11) voneinander beabstandet ausgebildet sind;
Bereitstellen der zweiten Welle mit einer zweiten Wellennabe (14) mit mehreren zweiten Aufnahmeeinheiten, die entlang des Umfangs der zweiten Wellennabe (14) voneinander beabstandet ausgebildet sind;
wobei die mehreren ersten Aufnahmeeinheiten als erste Aussparungen entlang des Umfangs der ersten Wellennabe (11) ausgebildet sind, und die mehreren zweiten Aufnahmeeinheiten als zweite Aussparungen entlang des Umfangs der zweiten Wellennabe (14) ausgebildet sind;
und
Einpassen mehrerer Verbindungselemente (12) in die mehreren ersten Aufnahmeeinheiten der ersten Wellennabe (11) und die mehreren zweiten Aufnahmeeinheiten der zweiten Wellennabe (14) ausschließlich in radialer Bewegungsrichtung, derart dass jedes der eingepassten Verbindungselemente (12) sowohl eine der mehreren ersten Aufnahmeeinheiten als auch eine der mehreren zweiten Aufnahmeeinheiten eingepasst ist.

12. Verfahren zum Entkuppeln einer ersten Welle von einer zweiten Welle, die über eine Wellenkupplungsvorrichtung (10) gemäß einem der Ansprüche 1 bis 8 miteinander verbunden sind, mit den folgenden in der genannten Reihenfolge aufeinander folgenden Schritten:
Lösen der mehreren Verbindungselemente (12) der Wellenkupplungsvorrichtung (10), insbesondere durch ausschließlich radiales Bewegen der mehreren Verbindungselemente (12) von der ersten Wellennabe (11) der ersten Welle und der zweiten Wellennabe (14) der zweiten Welle weg; und
Verschieben der ersten Welle gegenüber der zweiten Welle ausschließlich in einer Richtung senkrecht zu der Längsrichtung der zweiten Welle.

## Claims

1. Shaft coupling device (10) comprising
a first shaft hub (11) of a first shaft, the first shaft hub (11) having a plurality of first receiving units
a second shaft hub (14) of a second shaft, the second shaft hub (14) having a plurality of second receiving units
a plurality of connection elements (12) for connecting the first and second shaft hubs to each other; and wherein
the plurality of first receiving units is arranged at a distance from each other along the circumference of the first shaft hub, and the plurality of second receiving units is arranged at a distance from each other along the circumference of the second shaft hub; wherein
the plurality of first receiving units are configured as first recesses along the circumference of the first shaft hub (11), and the plurality of second receiving units are configured as second recesses along the circumference of the second shaft hub (14) and each of the plurality of connection elements (12) can be fitted in both one of the plurality of first receiving units and one of the plurality of second receiving units; and
**characterized in that**
the plurality of first and second receiving units is configured such that the plurality of connection elements (12) can be releasably fitted in an exclusively radial direction of movement and can be released from the first and second shaft hubs exclusively in a radial direction of movement.

2. The shaft coupling device (10) according to claim 1, wherein an elastic material is provided in the first and/or second recesses.

3. The shaft coupling device (10) according to one of the preceding claims, wherein the first shaft hub (11) and the second shaft hub (14) are rotationally symmetrical.

4. The shaft coupling device (10) according to one of the preceding claims, wherein the plurality of connection elements (12) is cuboidal in shape.

5. The shaft coupling device (10) according to one of the preceding claims, further comprising fastening means (13) configured to secure the plurality of connection elements (12) in the plurality of first receiving units and/or the plurality of second receiving units.

6. The shaft coupling device (10) according to claim 5, wherein the fastening means (13) comprises screws and/or a ring flange.

7. The shaft coupling device (10) according to claim 6, in which
the fastening means (13) comprises screws,
at least some of the connection elements (12) comprise threads or threadless passages which are configured to receive the screws, and
the first shaft hub (11) and/or the second shaft hub (14) comprise threads which are configured to receive the screws.

8. The shaft coupling device (10) according to one of the preceding claims, wherein the plurality of first or second receiving units is configured such that the plurality of connection elements (12) can be releasably fitted into the plurality of first or second receiving units with play.

9. Comminuting device (100) comprising:
a material receiving space (101);
a first shaft, in particular a drive shaft
a second shaft, in particular a rotor shaft (102, 102') arranged in the material receiving space; and
a shaft coupling device (10) according to one of the preceding claims for connecting the drive shaft to the rotor shaft (102, 102').

10. Comminuting device (100) according to claim 9, wherein the comminuting device (100) is a single-shaft or multi-shaft comminutor, in particular a vertical comminutor.

11. Method for coupling a first shaft to a second shaft, comprising the steps below following one another in the order mentioned:
providing the first shaft with a first shaft hub (11) having a plurality of first receiving units which are arranged at a distance from each other along the circumference of the first shaft hub (11);
providing the second shaft with a second shaft hub (14) having a plurality of second receiving units which are arranged at a distance from each other along the circumference of the second shaft hub (14);
wherein the plurality of first receiving units are configured as first recesses along the circumference of the first shaft hub (11), and the plurality of second receiving units are configured as second recesses along the circumference of the second shaft hub (14); and
fitting a plurality of connection elements (12) into the plurality of first receiving units of the first shaft hub (11) and the plurality of second receiving units of the second shaft hub (14) exclusively in the radial direction of movement such that each of the plurality of connection elements (12) is fitted in both one of the plurality of first receiving units and one of the plurality of second receiving units.

12. Method for uncoupling a first shaft from a second shaft, which are connected to each other via a shaft coupling device (10) according to one of claims 1 to 8, comprising the steps below, following one another in the order mentioned:
releasing the plurality of connection elements (12) of the shaft coupling device (10), in particular by moving the plurality of connection elements (12) exclusively radially away from the first shaft hub (11) of the first shaft and the second shaft hub (14) of the second shaft; and
displacing the first shaft relative to the second shaft exclusively in a direction perpendicular to the longitudinal direction of the second shaft.

## Revendications

1. Dispositif d'accouplement d'arbre (10), comprenant
un premier moyeu d'arbre (11) d'un premier arbre, dans lequel le premier moyeu d'arbre (11) comprend plusieurs premières unités de réception ;
un second moyeu d'arbre (14) d'un second arbre, dans lequel le second moyeu d'arbre (14) comprend plusieurs secondes unités de réception ;
plusieurs éléments de raccordement (12) permettant de raccorder le premier moyeu d'arbre et le second moyeu d'arbre ; et dans lequel
les plusieurs premières unités de réception sont réalisées de manière espacée les unes des autres le long de la circonférence du premier moyeu d'arbre, et les plusieurs secondes unités de réception sont réalisées de manière espacée les unes des autres le long de la circonférence du second moyeu d'arbre ;
les plusieurs premières unités de réception sont réalisées sous la forme de premiers évidements le long de la circonférence du premier moyeu d'arbre (11), et les plusieurs secondes unités de réception sont réalisées sous la forme de seconds évidements le long de la circonférence du second moyeu d'arbre (14), et chacun des plusieurs éléments de raccordement (12) peut être mis en place dans une parmi les plusieurs premières unités de réception et dans une parmi les plusieurs secondes unités de réception ; et **caractérisé en ce que**
les plusieurs premières et secondes unités de réception sont réalisées de sorte que les plusieurs éléments de raccordement (12) peuvent être mis en place de manière amovible dans une direction de déplacement exclusivement radiale et peut être détachés des premier et second moyeux d'arbre dans une direction de déplacement exclusivement radiale.

2. Dispositif d'accouplement d'arbre (10) selon la revendication 1, dans lequel un matériau élastique est fourni dans les premier et/ou second évidements.

3. Dispositif d'accouplement d'arbre (10) selon l'une quelconque des revendications précédentes, dans lequel le premier moyeu d'arbre (11) et le second moyeu d'arbre (14) sont réalisés de manière symétrique en rotation.

4. Dispositif d'accouplement d'arbre (10) selon l'une quelconque des revendications précédentes, dans lequel les plusieurs éléments de raccordement (12) sont de forme parallélépipédique.

5. Dispositif d'accouplement d'arbre (10) selon l'une quelconque des revendications précédentes, comprenant en outre un moyen de fixation (13) conçu pour maintenir les plusieurs éléments de raccordement (12) dans les plusieurs premières unités de réception et/ou dans les plusieurs secondes unités de réception.

6. Dispositif d'accouplement d'arbre (10) selon la revendication 5, dans lequel le moyen de fixation (13) comprend des vis et/ou une bride annulaire.

7. Dispositif d'accouplement d'arbre (10) selon la revendication 6, dans lequel le moyen de fixation (13) comprend des vis ;
au moins certains des éléments de raccordement (12) comprennent des filetages ou des passages non filetés conçus pour accueillir les vis, et
le premier moyeu d'arbre (11) et/ou le second moyeu d'arbre (14) comprend ou comprennent des filetages conçus pour accueillir les vis.

8. Dispositif d'accouplement d'arbre (10) selon l'une quelconque des revendications précédentes, dans lequel les plusieurs premières ou secondes unités de réception sont réalisées de telle manière que les plusieurs éléments de raccordement (12) peuvent être mis en place de manière amovible dans les plusieurs premières ou secondes unités de réception avec un jeu.

9. Dispositif de broyage (100) comprenant :
un espace de réception de matériau (101) ;
un premier arbre, en particulier un arbre d'entraînement ;
un second arbre, en particulier un arbre de rotor (102, 102') agencé dans la chambre de réception de matériau et
un dispositif d'accouplement d'arbre (10) selon l'une quelconque des revendications précédentes permettant de relier l'arbre d'entraînement à l'arbre de rotor (102, 102').

10. Dispositif de broyage (100) selon la revendication 9, dans lequel le dispositif de broyage (100) est un broyeur à arbre unique ou à arbres multiples, en particulier un broyeur vertical.

11. Procédé de couplage d'un premier arbre à un second arbre, comprenant les étapes ci-dessous se succédant dans l'ordre indiqué :
fournir le premier arbre comprenant un premier moyeu d'arbre (11) muni de plusieurs premières unités de réception réalisées de manière espacée les unes des autres le long de la circonférence du premier moyeu d'arbre (11) ;
fournir le premier arbre comprenant un premier moyeu d'arbre (14) muni de plusieurs premières unités de réception réalisées de manière espacée les unes des autres le long de la circonférence du premier moyeu d'arbre (14) ;
dans lequel les plusieurs premières unités de réception sont réalisées sous la forme de premiers évidements le long de la circonférence du premier moyeu d'arbre (11), et les plusieurs secondes unités de réception sont réalisées sous la forme de seconds évidements le long de la circonférence du second moyeu d'arbre (14) ; et
mettre en place plusieurs éléments de raccordement (12) dans les plusieurs premières unités de réception du premier moyeu d'arbre (11) et les plusieurs secondes unités de réception du second moyeu d'arbre (14) exclusivement dans la direction de déplacement radiale de telle manière que chacun des éléments de raccordement (12) mis en place est mis en place dans une des plusieurs premières unités de réception et dans une des plusieurs secondes unités de réception.

12. Procédé de découplage entre des premier et second arbres raccordés entre eux par l'intermédiaire d'un dispositif d'accouplement d'arbre (10) selon l'une quelconque des revendications 1 à 8, comprenant les étapes ci-dessous se succédant dans l'ordre indiqué :
détacher les plusieurs éléments de raccordement (12) du dispositif d'accouplement d'arbre (10), en particulier en déplaçant de manière exclusivement radiale les plusieurs éléments de raccordement (12) par rapport au premier moyeu d'arbre (11) du premier arbre et au second moyeu d'arbre (14) du second arbre ; et
déplacer le premier arbre par rapport au second arbre exclusivement dans une direction perpendiculaire à la direction longitudinale du second arbre.
